(19) Europäisches Patentamt
European Patent Office
Office européen des brevets

(11) EP 3 911 702 B1

(12) # EUROPEAN PATENT SPECIFICATION

(45) Date of publication and mention of the grant of the patent:
**28.12.2022 Bulletin 2022/52**

(21) Application number: **20700106.6**

(22) Date of filing: **07.01.2020**

(51) International Patent Classification (IPC):
***C08L 23/16*** *(2006.01)*

(52) Cooperative Patent Classification (CPC):
(C-Sets available)
**C08L 23/16;** C08L 2203/16; C08L 2205/03 (Cont.)

(86) International application number:
**PCT/EP2020/050156**

(87) International publication number:
**WO 2020/148105 (23.07.2020 Gazette 2020/30)**

(54) **POLYOLEFIN COMPOSITION**

POLYOLEFINZUSAMMENSETZUNG

COMPOSITIONS DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2019 EP 19151614**

(43) Date of publication of application:
**24.11.2021 Bulletin 2021/47**

(73) Proprietor: **Basell Poliolefine Italia S.r.l.**
**20121 Milano (IT)**

(72) Inventors:
- **GALVAN, Monica**
  **44122 Ferrara (IT)**
- **GRAZZI, Michele**
  **44122 Ferrara (IT)**
- **CIARAFONI, Marco**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 936 247** **EP-B1- 0 936 247**
**WO-A1-2011/036077** **WO-A1-2011/061087**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/16, C08L 23/06, C08L 23/12**

## Description

### FIELD OF THE INVENTION

The present disclosure relates to polyolefin compositions, to their preparation and to their use as impact modifiers in polyolefin blends. The thus-obtained polyolefin blends can be injection molded into large objects which exhibit enhanced mechanical properties, like impact strength and scratch resistance.

### BACKGROUND OF THE INVENTION

Impact modifier compositions, consisting of or comprising a prevailingly amorphous olefin copolymer, are often added in polyolefin compositions to enhance the impact resistance as required in many applications, such as automotive applications.
An advantage of using an impact modifier composition is that it can be added to many different kinds of polyolefins to achieve a final composition ready for production of articles such as automobile bumpers. Thus, there is a constant need for impact modifier compositions able to produce, by blending with various polyolefin materials, final compositions exhibiting a good balance of properties. In particular, the reduction of thermal shrinkage imparts a higher dimensional stability to the final articles.
WO 2016/207235 relates to an impact modifier composition containing: propylene homopolymer; ethylene homopolymer and a copolymer of propylene and ethylene. Scratch resistance and impact resistance can be improved with respect to this kind of composition.
It has now been found that, by modifying the third component of the composition it is possible to obtain polyolefin blends having high values of impact resistance and scratch resistance.

### SUMMARY OF THE INVENTION

Thus, the present disclosure is directed to a polyolefin composition comprising:

A) 5-35% by weight of a propylene homopolymer containing 10% by weight or less of a fraction soluble in xylene at 25°C ($XS_A$), the amount of the fraction $XS_A$ being referred to the weight of A);
B) 20-50% by weight; of an ethylene homopolymer having 5% by weight or less of a fraction soluble in xylene at 25°C ($XS_B$) referred to the weight of (B); and
C) 30-60% by weight of a terpolymer, wherein the terpolymer contains ethylene, propylene and 1-butene derived units containing from 45% to 65% by weight of ethylene units; and from 15% to 38% by weight of 1-butene units; and containing from 30% to 85% by weight of a fraction soluble in xylene at 25°C (XSc), the amount of ethylene units; 1-butene units and the fraction XSc being referred to the weight of (C);

the amounts of (A), (B) and (C) being referred to the total weight of (A) + (B) + (C), the sum of the amount of (A) + (B) + (C) being 100 wt%.

### DETAILED DESCRIPTION OF THE INVENTION

Thus, the present disclosure is directed to a polyolefin composition comprising:

A) 5-35% by weight; preferably 10-30 % by weight; more preferably 15-23%by weight of a propylene homopolymer containing 10% by weight or less preferably 8 wt% or less more preferably 6 wt% or less of a fraction soluble in xylene at 25°C ($XS_A$), the amount of the fraction $XS_A$ being referred to the weight of A);
B) 20-50% by weight; preferably 25-45% by weight; more preferably 30-40 % by weight an ethylene homopolymer having 5% by weight or less; preferably 4 wt% or less; more preferably 3 wt% or less of a fraction soluble in xylene at 25°C ($XS_B$), the amount of the fraction $XS_B$ being referred to the weight of (B); and
C) 30-60% by weight; preferably 35-55% by weight; more preferably 40-50 % by weight of a terpolymer of ethylene, propylene and 1-butene containing from 45% to 65% by weight preferably from 48 % to 62 % by weight; more preferably from 50 % to 60 % by weight of ethylene units; and from 15% to 38%; preferably from 18 % to 33 % by weight, more preferably from 20 % to 30 % by weight of 1-butene units; and containing from 30% to 85%; preferably from 35% to 50% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B)

+ (C) being 100.

Component (A) preferably has the melt flow rate (230°C/2.16 kg) ranging between 50 and 200 g/10 min; more preferably between 80 and 170 g/10 min.

The ethylene homopolymer (B) may contain up to 5% by weight preferably up to 3% by weight of comonomer units. When comonomer units are present, they derive from one or more comonomers selected from $C_3$ to $C_8$ alpha-olefins. Specific examples of such alpha-olefin comonomers are propylene, butene-1, pentene-1, 4-methylpentene-1, hexene-1 and octene-1, preferably propylene or 1-butene. Preferably the ethylene homopolymer (B) does not contain additional comonomer units.

The ethylene homopolymer (B) preferably has a melt flow rate (230°C/2.16 kg) comprised between 0.1 and 50 g/10 min. preferably comprised between 0.1 and 30 g/10 min; more preferably comprised between 0.1 and 10 g/10 min.

Preferably the ethylene homopolymer (B) may have a density (determined according to ISO 1183 at 23°C) of from 0.940 to 0.965 g/cm$^3$.

Components (A)+ (B) blended together preferably have the melt flow rate (230°C/2.16 kg) comprised between 0.1 and 70 g/10 min. preferably between 1 and 50 g/10 min; more preferably between 8 and 40 g/10 min.

Preferably the polyolefin composition (A)+(B)+(C) has a melt flow rate (230°C/2.16 kg) comprised between 0.5 to 25 g/10min preferably from 0.8 to 20.0g/10min; even more preferably from 1.0 to 18.0g/10min..

Preferably the xylene soluble fraction at 25° C of the polyolefin composition (A+B+C) has an intrinsic viscosity [$\eta$] (measured in tetrahydronaphthalene at 135 °C) comprised between 2.4 and 3.8 dl/g preferably between 2.4 and 3.5 dl/g, more preferably the intrinsic viscosity is comprised between 2.5 and 3.3 dl/g.

For the present disclosure, the term "copolymer" means polymer containing two kinds of comonomers, such as propylene and ethylene or ethylene and 1-butene and the term "terpolymer" means polymer containing three kinds of comonomers, such as propylene, ethylene and 1-butene.

It has been found that the polyolefin composition can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus, in a preferred embodiment, the polymer composition of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

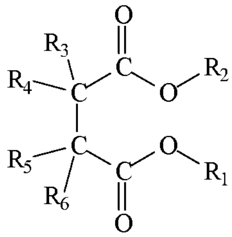

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1aR^2{}_bSi(OR^3)_c$, where a and b are integer numbers from 0 to 2, c is an integer from 1 to 3 and the sum (a+b+c) is 4; $R^1$, $R^2$ and $R_3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si (OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The polyolefin composition of the present disclosure can be used as impact modifier in polyolefin blend for moulding application in particular for the production of injection moulding articles. However, the polyolefin composition of the present disclosure can be used also for films or moulded articles.

In particular when used as impact modifier in polyolefin blend for moulding application it is possible to obtain a composition having very low value of Scratch resistance (10 N),N127 (measured according to GME 60280). Values lower than 2.0 dL; preferably lower than 1.8 dL; more preferably lower than 1.7 dL can be obtained.

The polyolefin composition may also contain conventional additives such as mineral fillers, fibers, colorants and stabilizers. Mineral fillers that can be included in the composition include talc, $CaCO_3$, silica, such as wollastonite ($CaSiO_3$), clays, diatomaceaous earth, titanium oxide and zeolites. Typically the mineral filler is in particle form having an average diameter ranging from 0.1 to 5 micrometers. Fibers that can be included in the composition include glass fibers, carbon fibers, metallic or ceramic fibers.

The following examples are given in order to illustrate, but not limit the present disclosure.

## EXAMPLES

### CHARACTERIZATIONS

#### Xylene-soluble (XS) Fraction at 25 °C

Solubility in xylene: Determined as follows:

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:

$$XS_{tot}=WaXS_A+WbXS_B+WcXS_C$$

wherein Wa, Wb and Wc are the relative amount of components A, B and C, respectively, and (A+B+C=1).

#### Melt Flow Rate (MFR)

Measured according to ISO 1133 at 230 °C with a load of 2.16 kg, unless otherwise specified.

#### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

#### Comonomer ($C_2$ and $C_4$) Content

The content of comonomers was determined by infrared (IR) spectroscopy by collecting the IR spectrum of the sample vs. an air background with a Fourier transform infrared spectrometer (FTIR). The instrument data acquisition parameters were:

purge time: 30 seconds minimum
collect time: 3 minutes minimum
apodization: Happ-Genzel
resolution: 2 cm-1.

Sample Preparation - Using a hydraulic press, a thick sheet was obtained by compression molding about 1 g of sample between two aluminum foil sheets. A small portion was cut from the resulting sheet to mold a film. The film thickness was set in order to have a maximum absorbance of the CH2 absorption band at ~720 cm-1 of 1.3 a.u. (% Transmittance > 5%). The molding conditions were carried out at a temperature of about 180 ± 10 °C (356 °F) and a pressure of about 10 kg/cm2 (142.2 psi) for about one minute. The pressure was then released, the sample was removed from the press and cooled to room temperature. The spectrum of the pressed film sample was recorded as a function of absorbance vs. wavenumbers (cm-1). The following measurements were used to calculate ethylene (C2) and 1-butene (C4) contents:

Area (At) of the combination absorption bands between 4482 and 3950 cm-1, which is used for spectrometric normalization of film thickness.

Area (AC2) of the absorption band due to methylenic sequences (CH2 rocking vibration) in a range of 660-790 cm-1 after a proper digital subtraction of an isotactic polypropylene (IPP) and a C2C4 references spectrum.

The factor of subtraction (FCRC4) between the spectrum of the polymer sample and the C2C4 reference spectrum: The reference spectrum is obtained by performing a digital subtraction of a linear polyethylene from a C2C4 copolymer in order to extract the C4 band (ethyl group at ~771 cm-1).

The ratio AC2/At is calibrated by analyzing ethylene-propylene standard copolymers of known compositions, as determined by NMR spectroscopy.

The assignments of the spectra, triad distribution and composition were made according to Kakugo ("Carbon-13 NMR determination of monomer sequence distribution in ethylene-propylene copolymers prepared with δ-titanium trichloride- diethylaluminum chloride," M. Kakugo, Y. Naito, K. Mizunuma and T. Miyatake, Macromolecules, 1982, 15, 1150).

In order to calculate the ethylene (C2) and 1-butene (C4) content, calibration curves were obtained by using samples of known amounts of ethylene and 1-butene that were detectable by 13C NMR.

Calibration for ethylene - A calibration curve was obtained by plotting AC2/At versus ethylene molar percent (%C2m), and the coefficients aC2, bC2 and cC2 were then calculated via linear regression.

Calibration for 1-butene - A calibration curve was obtained by plotting FCRC4/At versus butane molar percent (%C4m), and the coefficients aC4, bC4 and CC4 were then calculated via linear regression.

The spectra of the unknown samples are recorded and then (At), (AC2) and (FCRC4) of the unknown sample are calculated.

The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

where aC4, bC4, cC4 aC2, bC2, cC2 are the coefficients of the two calibrations.

Changes from mol% to wt% are calculated by using molecular weights of the compound(s).

Amount (wt%) of comonomer of components B-C are calculated by using the following relationship:

$$Com_{tot} = WaCom_A + WbCom_B + WcCom_C$$

wherein Wa, Wb and Wc are the relative amount of components A, B and C, respectively, and (A+B+C=1).

$Com_{tot}$, $Com_A$, $Com_B$ and ComC are the amounts of comonomer in the total composition (tot) and in components A-C.

**Example 1 - Preparation of the Polyolefin Composition**

Catalyst precursor:

The solid catalyst component used in the polymerization was a Ziegler-Natta catalyst component supported on magnesium chloride ($MgCl_2$) containing titanium and diisobutylphthalate as an internal donor and prepared as follows. An initial amount of microspheroidal $MgCl_2 \cdot 2.8C_2H_5OH$ was prepared according to Example 2 of U.S. Pat. No. 4,399,054, but operating at 3,000 rpm instead of 10,000 rpm. The resulting adduct was subjected to thermal dealcoholation at increasing temperatures from 30-130 °C in a nitrogen current until the molar alcohol content per mol of Mg was about

1.16. Into a 1000 mL four-necked round flask, purged with nitrogen, 500 mL of $TiCl_4$ were introduced at 0 °C. While stirring, 30 grams of the microspheroidal $MgCl_2 \cdot 1.16C_2H_5OH$ adduct (prepared as described above) were added. The temperature was raised to 120 °C and kept at this value for 60 minutes. During the temperature increase, an amount of diisobutylphthalate was added to produce a Mg/ diisobutylphthalate molar ratio of about 18. After 60 minutes, the stirring was stopped, the liquid siphoned off and the treatment with $TiCl_4$ was repeated at 100 °C for 1 hour in the presence of an amount of diisobutylphthalate to produce a Mg/ diisobutylphthalate molar ratio of about 27. The stirring was then stopped, the liquid siphoned off and the treatment with $TiCl_4$ was repeated at 100 °C for 30 min. After sedimentation and siphoning at 85 °C, the solid was washed six times with anhydrous hexane (6 x 100 ml) at 60 °C.

Catalyst system and prepolymerization:

Before introducing it into the polymerization reactors, the solid catalyst component described above was contacted at 30 °C for 9 minutes with aluminum triethyl (TEAL) and dicyclopentyldimethoxysilane (DCPMS) at a TEAL/DCPMS weight ratio of about 15 and in such a quantity that the TEAL/solid catalyst component weight ratio was about 4.

The catalyst system was then subjected to prepolymerization by maintaining it in a liquid propylene suspension at 50 °C for about 75 minutes before introducing it into the first polymerization reactor.

Polymerization

The polymerization was carried out in continuous mode in a series of three gas-phase reactors equipped with devices to transfer the product from the first reactor to the second one. A propylene-based polymer (A) was produced in the first gas phase polymerization reactor by feeding the prepolymerized catalyst system, hydrogen the molecular weight regulator) and propylene, all in the gas state, in a continuous and constant flow. The propylene-based polymer (A) coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene (B) was produced. The product coming from the second reactor was discharged in a continuous flow and, after having been purged of unreacted monomers, is introduced, in a continuous flow, into the third gas phase reactor, together with quantitatively constant flows of hydrogen, ethylene and propylene, all in the gas state. In the third reactor an ethylene-propylene polymer (C) was produced. Polymerization conditions, molar ratio of the reactants and compositions of the resulting copolymers are shown in Table 1. The polymer particles exiting the third reactor were subjected to a steam treatment to remove the reactive monomers and volatile substances and then dried. Thereafter the polymer particles were mixed with a stabilizing additive composition in a twin screw extruder Berstorff ZE 25 (length/diameter ratio of screws: 34) and extruded under a nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition comprised the following components:

- 0.1% by weight of Irganox® 1010;
- 0.1% by weight of Irgafos® 168; and
- 0.04% by weight of DHT-4A (hydrotalcite);

where all percentage amounts refer to the total weight of the polymer and stabilizing additive composition.

Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, and Irgafos® 168 is tris(2,4-di-tert.-butylphenyl)phosphite. The characteristics of the polymer composition, reported in Table 2, are obtained from measurements carried out on the extruded polymer, which constitutes the stabilized ethylene polymer composition according to certain embodiments disclosed herein.

Table 1 - Polymerization conditions

| | | | |
|---|---|---|---|
| | | | |

(continued)

| Example | | Example 1 | Comp.2 |
|---|---|---|---|
| **1st Reactor - component (A)** | | | |
| Temperature | °C | 60 | 60 |
| Pressure | barg | 16 | 16 |
| $H_2/C_{3-}$ | mol. | 0.16 | 0.20 |
| Split | wt% | 20 | 20 |
| Xylene soluble of (A) ($XS_A$) | wt% | 4.6 | 4.5 |
| **2nd Reactor - component (B)** | | | |
| Temperature | °C | 80 | 80 |
| Pressure | barg | 18 | 17 |
| $H_2/C_{2-}$ | mol. | 1.04 | 0.26 |
| $C_{4-}/(C_{2-}+C_{4-})$ | mol. | 0 | 0 |
| $C_{2-}/(C_{2-}+C_{3-})$ | mol. | 0.83 | 0.90 |
| Split | wt% | 35 | 35 |
| $C_2$- content of B * | wt% | 100 | 100 |
| $C_4$- content of B * | wt% | 0 | 0 |
| **3rd Reactor - component (C)** | | | |
| Temperature | °C | 67 | 65 |
| Pressure | barg | 16 | 16 |
| $H_2/C_{2-}$ | mol. | 0.16 | 0.15 |
| $C_{3-}/(C_{2-}+C_{3-})$ | mol. | 0.42 | 0.41 |
| $C_{4-}/(C_{2-}+C_{4-})$ | | 0.41 | 0 |
| Split | wt% | 45 | 45 |
| Notes: $C_{2-}$ = ethylene (IR); C3- = propylene (IR); $C_{4-}$ = 1-butene (IR); split = amount of polymer produced in the concerned reactor. * Calculated values. | | | |

The features of the polymer of Example 1 and comparative example 2 are reported in Table 2.

Table 2

| Example | | 1 | Comp 2 |
|---|---|---|---|
| component A | | | |
| $C_2$ content | wt% | 0 | 0 |
| XSA | wt% | 4.6 | 4.3 |
| MFR | g/10 min | 110 | 100 |
| split | wt% | 20 | 20 |
| component B | | | |
| XSB* | wt% | 1.7 | 1.7 |
| $C_2$ content* | wt% | 100 | 100 |
| split | wt% | 35 | 35 |
| MFR | g/10 min | 17.4 | 4.5 |

(continued)

| | | | |
|---|---|---|---|
| Component C | | | |
| XSC* | wt% | 39.5 | 39.8 |
| $C_2$ content* | wt% | 55.0 | 54.2 |
| $C_4$ content* | wt% | 23 | 0 |
| split | wt% | 45 | 45 |
| total composition | | | |
| MFR | g/10 min | 0.9 | 1.4 |
| IV on soluble in Xylene at 25°C | dl/g | 2.75 | 2.43 |
| $C_2$ = ethylene ; $C_4$ = 1-butene;<br>* calculated | | | |

The polyolefin composition prepared as described above were blended at 16% by extrusion under the previously described conditions with the additional components reported below:

- 20.8% by weight of Moplen EP300M an heterophasic polypropylene commercialized by LyondellBasell;
- 36.7 by weight of Moplen EP500V an ultra-high fluidity polypropylene copolymer used for injection moulding applications polypropylene commercialized by LyondellBasell;
- 17% by weight of talc Luzennac j etfine 3 CA;
- 9.5 wt of a premix composition.

The talc filled stabilized blend was extruded under nitrogen atmosphere in a twin screw extruder Leistritz 27mm (length/diameter ratio of screws: 40) in the following conditions:

- Rotation speed: 350 rpm;
- Extruder output: 25 kg/hour;
- Melt temperature: 240 °C

The properties of the so obtained final composition are also reported in Table 3.

| | | | EX 1 | Comp EX 2 |
|---|---|---|---|---|
| Properties | Norm | Unit | | |
| MFR 230/2,16 | ISO 1133 | g/10' | 20.3 | 20.1 |
| Ash content 1 h, 625 °C | ISO 3451/1 | % | 17.9 | 17.1 |
| Flexural Modulus (E-Modul) | ISO 178 and ISO 1873-2. | N/mm2 | 1688 | 1677 |
| Charpy Notched Impact 23 °C | ISO 179/1eA And ISO 1873-2 | kJ/m2 | 20.9 | 18.4 |
| Charpy Notched Impact 0°C | | kJ/m2 | 7,1 | 6.3 |
| Charpy Notched Impact -30 °C | | kJ/m2 | 3.84 | 2.9 |
| Gloss 60°, N127 | GME 60413 | G | 1,3 | 1,3 |
| Scratch resistance (10 N),N127 | GME 60280 | dL* | 1,6 | 2,2 |
| Scratch resistance (10 N),N111 | GME 60280 | dL* | 0,8 | 1,5 |

The Charpy notched impact test of example 1 is higher with respect to the comparative example. Furthermore the scratch resistance is lower.

## Claims

1. A polyolefin composition comprising:

   A) 5-35% by weight of a propylene homopolymer containing 10% by weight or less of a fraction soluble in xylene at 25°C ($XS_A$) the amount of of the fraction $XS_A$ being referred to the weight of A);
   B) 20-50% by weight; of an ethylene homopolymer having 5% by weight or less of a fraction soluble in xylene at 25°C ($XS_B$) referred to the weight of (B); and
   C) 30-60% by weight of a terpolymer of ethylene, propylene and 1-butene derived units containing from 45% to 65% by weight of ethylene units; and from 15% to 38% by weight of 1 -butene units; and containing from 30% to 85% by weight of a fraction soluble in xylene at 25°C (XSc), the amount of ethylene units; 1-butene units and the fraction XSc being referred to the weight of (C);

   the amounts of (A), (B) and (C) being referred to the total weight of (A) + (B) + (C), the sum of the amount of (A) + (B) + (C) being 100 wt%.

2. The polyolefin composition to claim 1 wherein:

   Component A ranges from 10 % by weight to 30 % by weight;
   Component B ranges from 25 % by weight to 45 % by weight; and
   Component C ranges from 35 % by weight to 55 % by weight;

3. The polyolefin composition according to claims 1 or 2 wherein

   Component A ranges from 15 % by weight to 23 % by weight;
   Component B ranges from 30 % by weight to 40 % by weight; and
   Component C ranges from 40 % by weight to 50 % by weight.

4. The polyolefin composition according to anyone of claims 1-3 wherein in component A) the fraction soluble in xylene at 25°C ($XS_A$) is 8 wt% or less.

5. The polyolefin composition according to anyone of claims 1-4 wherein component B) is an ethylene homopolymer having 4 wt% or less of a fraction soluble in xylene at 25°C ($XS_B$).

6. The polyolefin composition according to anyone of claims 1-5 wherein component C) is terpolymer of ethylene, propylene and 1-butene containing from 48 % to 62 % by weight; of ethylene units; and from 18 % to 33 % by weight of 1-butene units.

7. The polyolefin composition according to anyone of claims 1-6 wherein component (A) has the melt flow rate (230°C/2.16 kg) ranging between 50 and 200 g/10 min.

8. The polyolefin composition according to anyone of claims 1-7 wherein component (B) has the melt flow rate (230°C/2.16 kg) ranging between 0.1 and 70 g/10 min.

9. The polyolefin composition according to anyone of claims 1-8 wherein component (A) has the melt flow rate (230°C/2.16 kg) ranging between 80 and 170 g/10 min;.

10. The polyolefin composition according to anyone of claims 1-9 wherein component (B) has the melt flow rate (230°C/2.16 kg) ranging between 0.1 and 30 g/10 min.

11. The polyolefin composition according to anyone of claims 1-10 wherein the ethylene homopolymer (B) has a density (determined according to ISO 1183 at 23°C) of from 0.940 to 0.965 g/cm$^3$.

12. The polyolefin composition according to anyone of claims 1-11 having a melt flow rate (230°C/2.16 kg) comprised between from 0.8 to 20.0g/10min.

13. An impact modifier comprising the polyolefin composition of claims 1-12.

**14.** A film comprising the polyolefin composition of claims 1-12.

**15.** A moulded article comprising the polyolefin composition of claims 1-12.

## Patentansprüche

**1.** Polyolefinzusammensetzung, umfassend:

A) 5 bis 35 Gew.% eines Propylenhomopolymers, das 10 Gew.% oder weniger von einer in Xylol bei 25 °C löslichen Fraktion ($XS_A$) enthält, wobei die Menge der Fraktion $XS_A$ sich auf das Gewicht von A) bezieht;
B) 20 bis 50 Gew.% eines Ethylenhomopolymers, das 5 Gew.% oder weniger von einer in Xylol bei 25 °C löslichen Fraktion ($XS_B$) aufweist, bezogen auf das Gewicht von (B); und
C) 30 bis 60 Gew.% eines Terpolymers aus von Ethylen, Propylen und 1-Buten abgeleiteten Einheiten, das 45 Gew.% bis 65 Gew.% Ethyleneinheiten und 15 Gew.% bis 38 Gew.% 1-Buteneinheiten enthält und 30 Gew.% bis 85 Gew.% einer in Xylol bei 25 °C löslichen Fraktion (XSc) enthält, wobei die Mengen der Ethyleneinheiten; 1-Buteneinheiten und der Fraktion XSc sich auf das Gewicht von (C) beziehen;

die Mengen von (A), (B) und (C) sich auf das Gesamtgewicht von (A) + (B) + (C) beziehen, wobei die Summe der Mengen von (A), (B) und (C) 100 Gew.% ergibt.

**2.** Polyolefinzusammensetzung nach Anspruch 1, wobei

Komponente A im Bereich von 10 Gew.% bis 30 Gew.% liegt;
Komponente B im Bereich von 25 Gew.% bis 45 Gew.% liegt; und
Komponente C im Bereich von 35 Gew.% bis 55 Gew.% liegt.

**3.** Polyolefinzusammensetzung nach Anspruch 1 oder 2, wobei

Komponente A im Bereich von 15 Gew.% bis 23 Gew.% liegt;
Komponente B im Bereich von 30 Gew.% bis 40 Gew.% liegt; und
Komponente C im Bereich von 40 Gew.% bis 50 Gew.% liegt.

**4.** Polyolefinzusammensetzung nach einem der Ansprüche 1 bis 3, wobei in Komponente A) die in Xylol bei 25 °C lösliche Fraktion ($XS_A$) 8 Gew.% oder weniger ist.

**5.** Polyolefinzusammensetzung nach einem der Ansprüche 1 bis 4, wobei Komponente B) ein Ethylenhomopolymer mit 4 Gew.% oder weniger von einer in Xylol bei 25 °C löslichen Fraktion ($XS_B$) ist.

**6.** Polyolefinzusammensetzung nach einem der Ansprüche 1 bis 5, wobei Komponente C) Terpolymer aus Ethylen, Propylen und 1-Buten ist, das 48 Gew.% bis 62 Gew.% Ethyleneinheiten und 18 Gew.% bis 33 Gew.% 1-Buteneinheiten enthält.

**7.** Polyolefinzusammensetzung nach einem der Ansprüche 1 bis 6, wobei Komponente (A) die Schmelzflussrate (230 °C/2,16 kg) im Bereich zwischen 50 und 200 g/10 min aufweist.

**8.** Polyolefinzusammensetzung nach einem der Ansprüche 1 bis 7, wobei Komponente (B) die Schmelzflussrate (230 °C/2,16 kg) im Bereich zwischen 0,1 und 70 g/10 min aufweist.

**9.** Polyolefinzusammensetzung nach einem der Ansprüche 1 bis 8, wobei Komponente (A) die Schmelzflussrate (230 °C/2,16 kg) im Bereich zwischen 80 und 170 g/10 min aufweist.

**10.** Polyolefinzusammensetzung nach einem der Ansprüche 1 bis 9, wobei Komponente (B) die Schmelzflussrate (230 °C/2,16 kg) im Bereich zwischen 0,1 und 30 g/10 min aufweist.

**11.** Polyolefinzusammensetzung nach einem der Ansprüche 1 bis 10, wobei das Ethylenhomopolymer (B) eine Dichte (bestimmt gemäß ISO 1183 bei 23 °C) von 0,940 bis 0,965 g/$cm^3$ aufweist.

**12.** Polyolefinzusammensetzung nach einem der Ansprüche 1 bis 11 mit einer Schmelzflussrate (230 °C/2,16 kg), die zwischen 0,8 und 20,0 g/10 min liegt.

**13.** Schlagzähmodifikator, umfassend die Polyolefinzusammensetzung nach den Ansprüchen 1 bis 12.

**14.** Film, umfassend die Polyolefinzusammensetzung nach den Ansprüchen 1 bis 12.

**15.** Formartikel, umfassend die Polyolefinzusammensetzung nach den Ansprüchen 1 bis 12.

## Revendications

**1.** Composition polyoléfinique comprenant :

A) 5-35% en poids d'un homopolymère de propylène contenant 10% en poids ou moins d'une fraction soluble dans le xylène à 25 °C ($XS_A$), la quantité de la fraction $XS_A$ se rapportant au poids de A) ;
B) 20-50 % en poids d'un homopolymère d'éthylène présentant 5 % en poids ou moins d'une fraction soluble dans le xylène à 25 °C ($XS_B$) par rapport au poids de (B) ; et
C) 30-60 % en poids d'un terpolymère de motifs dérivés d'éthylène, de propylène et de 1-butène contenant 45 % à 65 % en poids de motifs d'éthylène ; et 15 % à 38 % en poids de motifs de 1-butène ; et contenant 30 % à 85 % en poids d'une fraction soluble dans le xylène à 25 °C (XSc), la quantité de motifs d'éthylène, de motifs de 1-butène et la fraction XSc se rapportant au poids de (C) ;

les quantités de (A), (B) et (C) se rapportant au poids total de (A) + (B) + (C), la somme des quantités de (A) + (B) + (C) valant 100 %.

**2.** Composition polyoléfinique selon la revendication 1, où

le constituant A représente 10 % en poids à 30 % en poids ;
le constituant B représente 25 % en poids à 45 % en poids ; et
le constituant C représente 35 % en poids à 55 % en poids ;

**3.** Composition polyoléfinique selon les revendications 1 ou 2, où

le constituant A représente 15 % en poids à 23 % en poids ;
le constituant B représente 30 % en poids à 40 % en poids ; et
le constituant C représente 40 % en poids à 50 % en poids.

**4.** Composition polyoléfinique selon l'une quelconque des revendications 1 à 3, où, dans le constituant A), la fraction soluble dans le xylène à 25 °C ($XS_A$) représente 8 % en poids ou moins.

**5.** Composition polyoléfinique selon l'une quelconque des revendications 1 à 4, où le constituant B) est un homopolymère d'éthylène présentant 4 % en poids ou moins d'une fraction soluble dans le xylène à 25 °C ($XS_B$).

**6.** Composition polyoléfinique selon l'une quelconque des revendications 1 à 5, où le constituant C) est un terpolymère d'éthylène, de propylène et de 1-butène contenant 48 % à 62 % en poids de motifs d'éthylène et 18 % à 33 % en poids de motifs de 1-butène.

**7.** Composition polyoléfinique selon l'une quelconque des revendications 1 à 6, où l'indice de fluidité à chaud (230 °C/2,16 kg) du constituant (A) est situé dans la plage de 50 à 200 g/10 min.

**8.** Composition polyoléfinique selon l'une quelconque des revendications 1 à 7, où l'indice de fluidité à chaud (230 °C/2,16 kg) du constituant (B) est situé dans la plage de 0,1 à 70 g/10 min.

**9.** Composition polyoléfinique selon l'une quelconque des revendications 1 à 8, où l'indice de fluidité à chaud (230 °C/2,16 kg) du constituant (A) est situé dans la plage de 80 à 170 g/10 min.

**10.** Composition polyoléfinique selon l'une quelconque des revendications 1 à 9, où l'indice de fluidité à chaud (230

°C/2,16 kg) du constituant (B) est situé dans la plage de 0,1 à 30 g/10 min.

**11.** Composition polyoléfinique selon l'une quelconque des revendications 1 à 10, où l'homopolymère d'éthylène (B) présente une densité (déterminée selon la norme ISO 1183 à 23 °C) de 0,940 à 0,965 g/cm$^3$.

**12.** Composition polyoléfinique selon l'une quelconque des revendications 1 à 11, présentant un indice de fluidité à chaud (230 °C/2,16 kg) situé dans la plage de 0,8 à 20,0 g/10 min.

**13.** Modificateur d'impact comprenant la composition polyoléfinique selon les revendications 1 à 12.

**14.** Film comprenant la composition polyoléfinique selon les revendications 1 à 12.

**15.** Article moulé comprenant la composition polyoléfinique selon les revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016207235 A
- US 4399054 A
- EP 45977 A
- EP 361493 A
- EP 728769 A

### Non-patent literature cited in the description

- **HUGGINS, M.L.** *J. Am. Chem. Soc.,* 1942, vol. 64, 2716
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride- diethylaluminum chloride. *Macromolecules,* 1982, vol. 15, 1150